(19) Europäisches Patentamt / European Patent Office / Office européen des brevets

(11) **EP 3 617 259 A1**

(12) **EUROPEAN PATENT APPLICATION**
published in accordance with Art. 153(4) EPC

(43) Date of publication:
**04.03.2020 Bulletin 2020/10**

(51) Int Cl.:
*C08J 9/28* (2006.01)        *C08K 3/34* (2006.01)
*C08L 83/05* (2006.01)        *C08L 83/07* (2006.01)

(21) Application number: **18863144.4**

(22) Date of filing: **11.06.2018**

(86) International application number:
**PCT/JP2018/022210**

(87) International publication number:
**WO 2019/064711 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2017 JP 2017188571**

(71) Applicant: **Nitto Denko Corporation**
**Ibaraki-shi, Osaka 567-8680 (JP)**

(72) Inventors:
• **ISEKI, Toru**
 **Ibaraki-shi**
 **Osaka 567-8680 (JP)**
• **TOKUYAMA, Hideyuki**
 **Ibaraki-shi**
 **Osaka 567-8680 (JP)**
• **KODAMA, Kiyoaki**
 **Ibaraki-shi**
 **Osaka 567-8680 (JP)**
• **SAITO, Makoto**
 **Ibaraki-shi**
 **Osaka 567-8680 (JP)**
• **KANADA, Mitsuhiro**
 **Ibaraki-shi**
 **Osaka 567-8680 (JP)**

(74) Representative: **Müller-Boré & Partner**
**Patentanwälte PartG mbB**
**Friedenheimer Brücke 21**
**80639 München (DE)**

(54) **TEMPORARY FIXING SHEET**

(57) Provided is a temporary fixing sheet including a silicone foam layer and having excellent antistatic performance and a satisfactory appearance. A temporary fixing sheet according to one embodiment of the present invention includes a silicone foam layer, wherein the silicone foam layer is formed of a silicone resin composition including: (A) an organopolysiloxane having at least two alkenyl groups in a molecule thereof; (B) an organopolysiloxane having at least two silicon atom-bonded hydrogen atoms in a molecule thereof; (C) a mixture including water and an inorganic thickener; (D-1) 0.2 part by weight to 1.2 parts by weight of a nonionic surfactant having an HLB value of 3 or more with respect to 1 part by weight of a component (G); (D-2) 0.01 part by weight to 0.14 part by weight of a nonionic surfactant having an HLB value of less than 3 with respect to 1 part by weight of the component (G); (E) a hydrosilylation reaction catalyst; (F) a curing retarder; and (G) a conductive substance.

**Description**

Technical Field

The present invention relates to a temporary fixing sheet.

Background Art

In recent years, a silicone foam has attracted attention as a foam material (for example, Patent Literatures 1 and 2).
The silicone foam is excellent in heat resistance, weather resistance, chemical resistance, and the like. Therefore, for example, when the silicone foam is further provided with conductivity, the silicone foam is useful as a temporary fixing member for an adherend in which prevention of static charge is required.
However, when the silicone foam is designed to be provided with sufficient antistatic performance by incorporating a conductive substance therein, it has been found that the silicone foam has a poor appearance when formed into a sheet.

Citation List

Patent Literature

    [PTL 1] JP 5702899 B2
    [PTL 2] JP 2014-167067 A

Summary of Invention

Technical Problem

An object of the present invention is to provide a temporary fixing sheet including a silicone foam layer and having excellent antistatic performance and a satisfactory appearance.

Solution to Problem

According to one embodiment of the present invention, there is provided a temporary fixing sheet, including a silicone foam layer, wherein the silicone foam layer is formed of a silicone resin composition including: (A) 100 parts by weight of an organopolysiloxane having at least two alkenyl groups in a molecule thereof; (B) an organopolysiloxane having at least two silicon atom-bonded hydrogen atoms in a molecule thereof in such an amount that a number of moles of the silicon atom-bonded hydrogen atoms in the component (B) is from 0.4 mol to 20 mol with respect to 1 mol of the alkenyl groups in the component (A); (C) 100 parts by weight to 1,000 parts by weight of a mixture including water and an inorganic thickener; (D-1) 0.2 part by weight to 1.2 parts by weight of a nonionic surfactant having an HLB value of 3 or more with respect to 1 part by weight of a component (G); (D-2) 0.01 part by weight to 0.14 part by weight of a nonionic surfactant having an HLB value of less than 3 with respect to 1 part by weight of the component (G); (E) a hydrosilylation reaction catalyst; (F) 0.001 part by weight to 5 parts by weight of a curing retarder; and (G) 0.1 part by weight to 100 parts by weight of a conductive substance when a total of the component (A) and the component (B) is defined as 100 parts by weight.
In one embodiment, an amount of the component (D-1) is from 0.5 part by weight to 1.1 parts by weight with respect to 1 part by weight of the component (G).
In one embodiment, the amount of the component (D-1) is from 0.7 part by weight to 1.0 part by weight with respect to 1 part by weight of the component (G).
In one embodiment, an amount of the component (D-2) is from 0.02 part by weight to 0.10 part by weight with respect to 1 part by weight of the component (G).
In one embodiment, the amount of the component (D-2) is from 0.04 part by weight to 0.07 part by weight with respect to 1 part by weight of the component (G).
In one embodiment, the component (G) includes carbon black.
In one embodiment, the carbon black includes ketjen black.
In one embodiment, the silicone foam layer has an apparent density of from 0.15 $g/cm^3$ to 0.90 $g/cm^3$.

In one embodiment, the temporary fixing sheet is used for temporary fixing of an electronic member.

Advantageous Effects of Invention

According to the present invention, the temporary fixing sheet including a silicone foam layer and having excellent antistatic performance and a satisfactory appearance can be provided.

Description of Embodiments

A temporary fixing sheet is a temporary fixing sheet including a silicone foam layer.

As a form of the temporary fixing sheet, there are given, for example: a form in which the temporary fixing sheet includes the silicone foam layer in the entirety of the sheet; and a form in which the temporary fixing sheet includes the silicone foam layer in part of the sheet, and in which at least one of outermost layers of the temporary fixing sheet is the silicone foam layer.

In the temporary fixing sheet, a separator may be attached to a surface of the silicone foam layer, for example, before use. When such separator does not function as a support, the separator is preferably peeled from the surface of the silicone foam layer before a member to be temporarily fixed is placed on the temporary fixing sheet.

The surface resistivity of the temporary fixing sheet is from $1.0 \times 10^4$ ohms per square ($\Omega/\square$) to $1.0 \times 10^{10}$ $\Omega/\square$, preferably from $1.0 \times 10^5$ $\Omega/\square$ to $1.0 \times 10^9$ $\Omega/\square$, more preferably from $5.0 \times 10^5$ $\Omega/\square$ to $5.0 \times 10^8$ $\Omega/\square$, still more preferably from $1.0 \times 10^6$ $\Omega/\square$ to $1.0 \times 10^8$ $\Omega/\square$, particularly preferably from $5.0 \times 10^6$ $\Omega/\square$ to $5.0 \times 10^7$ $\Omega/\square$. When the surface resistivity of the temporary fixing sheet falls within the above-mentioned range, the temporary fixing sheet has excellent antistatic performance.

The thickness of the temporary fixing sheet is preferably from 10 $\mu$m to 3,500 $\mu$m, more preferably from 20 $\mu$m to 2,500 $\mu$m, still more preferably from 30 $\mu$m to 1,500 $\mu$m, particularly preferably from 40 $\mu$m to 950 $\mu$m, most preferably from 50 $\mu$m to 800 $\mu$m. Even when the temporary fixing sheet has such a small thickness, the temporary fixing sheet can have a satisfactory appearance.

The silicone foam layer is formed of a silicone resin composition. The silicone foam layer is preferably formed by thermally curing the silicone resin composition.

The silicone resin composition includes the following components (A), (B), (C), (D-1), (D-2), (E), (F), and (G).

The total ratio of the following components (A), (B), (C), (D-1), (D-2), (E), (F), and (G) in the silicone resin composition in terms of weight ratio is preferably from 50 weight% to 100 weight%, more preferably from 70 weight% to 100 weight%, still more preferably from 90 weight% to 100 weight%, still further more preferably from 95 weight% to 100 weight%, particularly preferably from 98 weight% to 100 weight%, most preferably substantially 100 weight%. When the total ratio of the following components (A), (B), (C), (D-1), (D-2), (E), (F), and (G) in the silicone resin composition falls within the above-mentioned range, the effects of the present invention can be further exhibited.

The silicone resin composition includes:

(A) 100 parts by weight of an organopolysiloxane having at least two alkenyl groups in a molecule thereof;
(B) an organopolysiloxane having at least two silicon atom-bonded hydrogen atoms in a molecule thereof in such an amount that the number of moles of the silicon atom-bonded hydrogen atoms in the component (B) is from 0.4 mol to 20 mol with respect to 1 mol of the alkenyl groups in the component (A);
(C) 100 parts by weight to 1,000 parts by weight of a mixture including water and an inorganic thickener;
(D-1) 0.2 part by weight to 1.2 parts by weight of a nonionic surfactant having an HLB value of 3 or more with respect to 1 part by weight of a component (G);
(D-2) 0.01 part by weight to 0.14 part by weight of a nonionic surfactant having an HLB value of less than 3 with respect to 1 part by weight of the component (G);
(E) a hydrosilylation reaction catalyst;
(F) 0.001 part by weight to 5 parts by weight of a curing retarder; and
(G) 0.1 part by weight to 100 parts by weight of a conductive substance when a total of the component (A) and the component (B) is defined as 100 parts by weight.

The component (A) is the organopolysiloxane having at least two alkenyl groups in a molecule thereof, and is the main agent of the composition. Examples of the alkenyl groups in the component (A) include a vinyl group, an allyl group, and a hexenyl group. Of those, a vinyl group is preferred. In addition, examples of a silicon atom-bonded organic group except the alkenyl groups in the component (A) include: alkyl groups, such as a methyl group, an ethyl group, a propyl group, a butyl group, a pentyl group, and a hexyl group; aryl groups, such as a phenyl group, a tolyl group, and a xylyl group; aralkyl groups, such as a benzyl group and a phenethyl group; and halogen-substituted alkyl groups, such as a 3,3,3-trifluoropropyl group. Of those, a methyl group is preferred. The components (A) may be used alone or in combination thereof.

Specific examples of the component (A) include dimethylpolysiloxane blocked with a dimethylvinylsiloxy group, a dimethylsiloxane-methylphenylsiloxane copolymer blocked with a dimethylvinylsiloxy group, methylvinylpolysiloxane blocked with a trimethylsiloxy group, a dimethylsiloxane-methylvinylsiloxane copolymer blocked with a trimethylsiloxy group, and a dimethylsiloxane-methylvinylsiloxane-methylphenylsiloxane copolymer blocked with a trimethylsiloxy group. Of those, diorganopolysiloxane having a substantially linear main chain is preferred.

The component (B) is the organopolysiloxane having at least two silicon atom-bonded hydrogen atoms in a molecule thereof, and is the cross-linking agent of the composition . The bonding positions of the silicon atom-bonded hydrogen atoms in the component (B) are not limited, and are, for example, ends of a molecular chain and/or side chains of a molecular chain. Examples of a silicon atom-bonded organic group except the hydrogen atoms in the component (B) include: alkyl groups, such as a methyl group, an ethyl group, a propyl group, a butyl group, a pentyl group, and a hexyl group; aryl groups, such as a phenyl group, a tolyl group, and a xylyl group; aralkyl groups, such as a benzyl group and a phenethyl group; and halogen-substituted alkyl groups, such as a 3,3,3-trifluoropropyl group. Of those, a methyl group is preferred. The components (B) may be used alone or in combination thereof.

Examples of such component (B) include dimethylpolysiloxane blocked with a dimethylhydrogensiloxy group, a dimethylsiloxane-methylhydrogensiloxane copolymer blocked with a dimethylhydrogensiloxy group, methylhydrogenpolysiloxane blocked with a trimethylsiloxy group, a dimethylsiloxane-methylhydrogensiloxane copolymer blocked with a trimethylsiloxy group, and an organopolysiloxane including a siloxane unit represented by $(CH_3)_3SiO_{1/2}$, a siloxane unit represented by $H(CH_3)_2SiO_{1/2}$, and a siloxane unit represented by $SiO_{4/2}$. Of those, a linear organopolysiloxane is preferred.

The content of the component (B) is such an amount that the number of moles of the silicon atom-bonded hydrogen atoms in the component (B) falls within the range of from 0.4 mol to 20 mol with respect to 1 mol of the alkenyl groups in the component (A), preferably such an amount that the number falls within the range of from 1.5 mol to 20 mol, more preferably such an amount that the number falls within the range of from 1.5 mol to 10 mol. This is because when the number of moles of the silicon atom-bonded hydrogen atoms in the component (B) falls within the range, the compression set of a silicone foam layer to be obtained is improved.

The component (C) is the mixture including the water and the inorganic thickener, and is a component for providing a silicone foam layer through the removal of the water in the component (C) from a silicone rubber obtained by cross-linking the composition. The water in the component (C) is preferably ion-exchanged water because the component (C) is stably dispersed in the component (A) .

The inorganic thickener in the component (C) is blended for increasing the viscosity of the water so that the component (C) may be easily dispersed in the component (A) and hence the state of dispersion of the component (C) may be stabilized. As the inorganic thickener, there are given natural or synthetic inorganic thickeners. Examples thereof include: natural or synthetic smectite clays, such as bentonite, montmorillonite, hectorite, saponite, sauconite, beidellite, and nontronite; magnesium aluminum silicate; and composites of those compounds and water-soluble organic polymers, such as a carboxyvinylpolymer. Of those, smectite clays, such as bentonite and montmorillonite, are preferred. For example, SUMECTON SA (manufactured by Kunimine Industries Co., Ltd.) serving as a hydrothermally synthesized product or BENGEL (manufactured by Hojun Co., Ltd.) serving as a naturally purified product is available as such smectite clay. The pH of such smectite clay preferably falls within the range of from 5.0 to 9.0 in terms of the maintenance of the heat resistance of a silicone foam layer. In addition, the content of the inorganic thickener in the component (C) preferably falls within the range of from 0.1 part by weight to 10 parts by weight, and more preferably falls within the range of from 0.5 part by weight to 5 parts by weight with respect to 100 parts by weight of the water. The inorganic thickeners in the component (C) may be used alone or in combination thereof.

The content of the component (C) falls within the range of from 100 parts by weight to 1,000 parts by weight, preferably falls within the range of from 100 parts by weight to 800 parts by weight, more preferably falls within the range of from 100 parts by weight to 500 parts by weight, still more preferably falls within the range of from 200 parts by weight to 500 parts by weight, and particularly preferably falls within the range of from 200 parts by weight to 350 parts by weight with respect to 100 parts by weight of the component (A). This is because of the following reasons: when the content of the component (C) is equal to or more than a lower limit for the range, a low-density silicone foam layer can be formed; meanwhile, when the content is equal to or less than an upper limit for the range, a silicone foam layer having a uniform and fine open-cell structure can be formed.

Examples of the nonionic surfactants serving as the component (D-1) and the component (D-2) include a glycerin fatty acid ester, a polyglycerin fatty acid ester, a sorbitan fatty acid ester, a sucrose fatty acid ester, a polyethylene glycol fatty acid ester, a polypropylene glycol fatty acid ester, a polyoxyethylene glycerin fatty acid ester, a polyoxyethylene sorbitan fatty acid ester, a polyoxyethylene-polyoxypropylene block copolymer, a polyoxyethylene alkyl ether, a polyoxyethylene alkyl phenyl ether, and a polyoxyethylene fatty acid amide. The components (D-1) may be used alone or in combination thereof. The components (D-2) may be used alone or in combination thereof.

The weight ratio of the component (D-1) to the component (D-2) is preferably 1 or more, more preferably 5 or more, still more preferably 8 or more, particularly preferably 10 or more, most preferably 15 or more. In addition, the weight ratio of the component (D-1) to the component (D-2) is preferably 100 or less, more preferably 80 or less, still more preferably 70 or less, particularly preferably 60 or less, most preferably 50 or less. When the weight ratio of the component (D-1) to the component (D-2) is more than the lower limit value, a low-density silicone foam layer having a uniform and fine open-cell structure can be formed. Meanwhile, when the weight ratio of the component (D-1) to the component (D-2) is less than the upper limit value, the component (C) can be dispersed in the component (A) and the component (B) with satisfactory stability, and as a result, a silicone foam layer having a uniform and fine open-cell structure can be formed.

The content of the component (D-1) is from 0.2 part by weight to 1.2 parts by weight, preferably from 0.4 part by weight to 1.1 parts by weight, more preferably from 0.5 part by weight to 1.1 parts by weight, still more preferably from 0.6 part by weight to 1.0 part by weight, particularly preferably from 0.7 part by weight to 1.0 part by weight with respect to 1 part by weight of the component (G). When the content of the component (D-1) falls within the above-mentioned range, a temporary fixing sheet including a silicone foam layer and having a satisfactory appearance can be provided.

The content of the component (D-2) is from 0.01 part by weight to 0.14 part by weight, preferably from 0.02 part by weight to 0.10 part by weight, more preferably from 0.03 part by weight to 0.09 part by weight, still more preferably from 0.04 part by weight to 0.08 part by weight, particularly preferably from 0.04 part by weight to 0.07 part by weight with respect to 1 part by weight of the component (G). When the content of the component (D-2) falls within the above-mentioned range, a temporary fixing sheet including a silicone foam layer and having a satisfactory appearance can be provided.

The component (E) is the hydrosilylation reaction catalyst for accelerating the hydrosilylation reaction of the silicone resin composition, and examples thereof include a platinum-based catalyst, a palladium-based catalyst, and a rhodium-based catalyst. Of those, a platinum-based catalyst is preferred. Examples of such component (E) include: chloroplatinic acid; an alcohol-modified chloroplatinic acid; a coordination compound of chloroplatinic acid and an olefin, vinylsiloxane, or an acetylene compound; a coordination compound of platinum and an olefin, vinylsiloxane, or an acetylene compound; tetrakis(triphenylphosphine)palladium; and chlorotris(triphenylphosphine)rhodium. The components (E) may be used alone or in combination thereof.

The content of the component (E) is an amount enough to cross-link the silicone resin composition. Specifically, the content is preferably such an amount that the content of a catalytic metal in the component (E) falls within the range of from 0.01 ppm to 500 ppm in terms of a weight with respect to the total amount of the component (A) and the component (B), and is more preferably such an amount that the content falls within the range of from 0.1 ppm to 100 ppm.

(F) The curing retarder may be incorporated for adjusting the curing rate and working pot life of the silicone resin composition. Examples of such component (F) include alkyne alcohols, such as 3-methyl-1-butyn-3-ol, 3,5-dimethyl-1-hexyn-3-ol, 3-phenyl-1-butyn-3-ol, and 1-ethynyl-1-cyclohexanol. The components (F) may be used alone or in combination thereof.

The content of the component (F), which is appropriately selected in accordance with a use method and molding method for the silicone resin composition, generally falls within the range of from 0.001 part by weight to 5 parts by weight with respect to 100 parts by weight of the component (A).

The component (G) is a conductive substance. Any appropriate conductive substance may be adopted as long as the effects of the present invention are not impaired. Examples of such conductive substance include: carbon-based conductive agents, such as carbon black, carbon fibers, carbonnanofibers, carbon nanotubes, graphite, and graphene; metal powders, such as gold, silver, and nickel; conductive zinc oxide, conductive titanium oxide, and conductive aluminum oxide; and conductive fillers obtained by subjecting the surfaces of fillers to conductive coating treatment, for example, subjecting the surfaces of various fillers to metal plating treatment. The components (G) may be used alone or in combination thereof.

From the viewpoint that the effects of the present invention can be further exhibited, the content of the component (G) is preferably from 0.1 part by weight to 100 parts by weight, more preferably from 0.2 part by weight to 50 parts by weight, still more preferably from 0.3 part by weight to 20 parts by weight, particularly preferably from 0.3 part by weight to 15 parts by weight when the total amount of the component (A) and the component (B) is defined as 100 parts by weight.

The conductive substance is preferably carbon black from the viewpoint that the effects of the present invention can be further exhibited.

As the carbon black, any appropriate carbon black may be adopted as long as the effects of the present invention are not impaired. Examples of such carbon black include ketjen black, acetylene black, conductive furnace black (CF), super-conductive furnace black (SCF), extra-conductive furnace black (XCF), conductive channel black (CC), furnace black subjected to heat treatment at a high temperature of about 1,500°C, and channel black subjected to heat treatment at a high temperature of about 1,500°C.

Specific examples of the ketjen black include Ketjen Black EC (manufactured by Ketjen Black International Co.) and Ketjen Black EC-600JD (manufactured by Ketjen Black International Co.).

Specific examples of the acetylene black include DENKA BLACK (manufactured by Denka Company Limited) and SHAWINIGAN ACETYLENE BLACK (manufactured by Shawinigan Chemicals Ltd.).

Specific examples of the conductive furnace black include Continex CF (manufactured by Continental Carbon Company) and VULCAN C (manufactured by Cabot Corporation).

Specific examples of the super-conductive furnace black include Continex SCF (manufactured by Continental Carbon Company) and VULCAN SC (manufactured by Cabot Corporation).

Specific examples of the extra-conductive furnace black include Asahi HS-500 (manufactured by Asahi Carbon Co., Ltd.) and VULCAN XC-72 (manufactured by Cabot Corporation).

An example of the conductive channel black is Corax L (manufactured by Degussa AG).

The carbon black is preferably the ketjen black from the viewpoint that the effects of the present invention can be further exhibited.

(H) Reinforcing silica fine powder maybe further incorporated into the silicone resin composition in terms of an improvement in strength of the silicone foam sheet to be obtained. Such component (H) is silica fine powder having a BET specific surface area of preferably from 50 $m^2/g$ to 350 $m^2/g$, more preferably from 80 $m^2/g$ to 250 $m^2/g$, and examples thereof include fumed silica and precipitated silica. In addition, such silica fine powder may be subjected to surface treatment with an organosilane or the like.

The content of the component (H) is preferably 20 parts by weight or less, more preferably 15 parts by weight or less, still more preferably 10 parts by weight or less with respect to 100 parts by weight of the component (A). The content of the component (H) is preferably 0.1 part by weight or more with respect to 100 parts by weight of the component (A).

A pigment (excluding carbon black), such as red oxide, may be incorporated in the silicone resin composition as long as the object of the present invention is not impaired.

The silicone resin composition may be produced by any appropriate method as long as the effects of the present invention are not impaired. From the viewpoint that the effects of the present invention can be further exhibited, the silicone resin composition may be preferably produced by a production method including: a step (I) of preparing a first silicone liquid containing "50.1 weight% or more of the total usage amount of the component (A)" and "60 weight% or more of the total usage amount of the component (G)"; a step (II) of preparing a second silicone liquid containing "60 weight% or more of the total usage amount of the component (B)" and "60 weight% or more of the total usage amount of the component (D-1) and the component (D-2)"; a step (III) of preparing a mixed liquid by mixing the first silicone liquid and the second silicone liquid; and a step (IV) of mixing the mixed liquid and "60 weight% or more of the total usage amount of the component (C)." When the silicone resin composition is produced by such method, the effects of the present invention can be further exhibited. In particular, when the silicone resin composition is produced by such method, an temporary fixing sheet to be finally obtained can exhibit significantly excellent antistatic performance.

Stirring is preferably performed as a mixing operation during the production of the silicone resin composition . For such stirring, for example, any appropriate mixer, such as a homomixer, a paddle mixer, a homodisper, a colloid mill, a vacuum mixing and stirring mixer, or a planetary centrifugal mixer, may be used.

In the step (I), it is preferred to mix and stir the "50.1 weight% or more of the total usage amount of the component (A)" and the "60 weight% or more of the total usage amount of the component (G)."

The usage amount of the component (A) in the step (I) is preferably 70 weight% or more of the total usage amount thereof, more preferably 80 weight% or more of the total usage amount thereof, still more preferably 90 weight% or more of the total usage amount thereof, particularly preferably 95 weight% or more of the total usage amount thereof, most preferably substantially 100 weight% (total amount) of the total usage amount thereof.

The usage amount of the component (G) in the step (I) is preferably 70 weight% or more of the total usage amount thereof, more preferably 80 weight% or more of the total usage amount thereof, still more preferably 90 weight% or more of the total usage amount thereof, particularly preferably 95 weight% or more of the total usage amount thereof, most preferably substantially 100 weight% (total amount) of the total usage amount thereof.

In the step (II), it is preferred to mix and stir the "60 weight% or more of the total usage amount of the component (B)" and the "60 weight% or more of the total usage amount of the component (D-1) and the component (D-2)."

The usage amount of the component (B) in the step (II) is preferably 70 weight% or more of the total usage amount thereof, more preferably 80 weight% or more of the total usage amount thereof, still more preferably 90 weight% or more of the total usage amount thereof, particularly preferably 95 weight% or more of the total usage amount thereof, most preferably substantially 100 weight% (total amount) of the total usage amount thereof.

The usage amount of the component (D-1) and the component (D-2) in the step (II) is preferably 70 weight% or more of the total usage amount thereof, more preferably 80 weight% or more of the total usage amount thereof, still more preferably 90 weight% or more of the total usage amount thereof, particularly preferably 95 weight% or more of the total usage amount thereof, most preferably substantially 100 weight% (total amount) of the total usage amount thereof.

The first silicone liquid to be prepared in the step (I) is preferably free of the component (B).

The first silicone liquid to be prepared in the step (I) is preferably free of the component (D-1) and the component (D-2).

The second silicone liquid to be prepared in the step (II) is preferably free of the component (A).

The second silicone liquid to be prepared in the step (II) is preferably free of the component (G).

In the step (IV), it is preferred to mix and stir the mixed liquid and the "60 weight% or more of the total usage amount of the component (C)."

The usage amount of the component (C) in the step (IV) is preferably 70 weight% or more of the total usage amount thereof, more preferably 80 weight% or more of the total usage amount thereof, still more preferably 90 weight% or more of the total usage amount thereof, particularly preferably 95 weight% or more of the total usage amount thereof, most preferably substantially 100 weight% (total amount) of the total usage amount thereof.

From the viewpoint that the effects of the present invention can be further exhibited, a temperature during the production of the silicone resin composition is preferably from 0°C to 50°C, more preferably from 5°C to 45°C, still more preferably from 10°C to 40°C, particularly preferably from 15°C to 35°C throughout all the steps.

The production of the silicone resin composition is preferably performed under normal pressure or vacuum.

In the production of the silicone resin composition, the component (E) may be added in any appropriate step or at any appropriate timing as long as the effects of the present invention are not impaired. From the viewpoint that the effects of the present invention can be further exhibited, the component (E) is preferably added in a step as closer to the end of the production as possible and at a timing at which the component (E) is brought into contact with the component (B).

In the production of the silicone resin composition, the component (F) may be added in any appropriate step or at any appropriate timing as long as the effects of the present invention are not impaired. From the viewpoint that the effects of the present invention can be further exhibited, the component (F) is preferably added in combination with the component (E) in advance.

A method of producing the silicone resin composition particularly preferably includes: a step (I) of preparing a first silicone liquid containing "substantially 100 weight% (total amount) of the total usage amount of the component (A)" and "substantially 100 weight% (total amount) of the total usage amount of the component (G)"; a step (II) of preparing a second silicone liquid containing "substantially 100 weight% (total amount) of the total usage amount of the component (B)" and "substantially 100 weight% (total amount) of the total usage amount of the component (D-1) and the component (D-2) "; a step (III) of preparing a mixed liquid by mixing the first silicone liquid and the second silicone liquid; and a step (IV) of mixing the mixed liquid and "substantially 100 weight% (total amount) of the total usage amount of the component (C)."

The silicone foam layer is formed of the silicone resin composition.

A method of forming the silicone foam layer according to one embodiment includes: applying the silicone resin composition onto a separator A (this step is hereinafter referred to as "step (1)"); placing a separator B on a surface of the applied silicone resin composition opposite to the separator A (this step is hereinafter referred to as "step (2)"); thermally curing the silicone resin composition (this step is hereinafter referred to as "step (3)"); and heating to dryness the silicone resin composition from which at least one kind selected from the separator A and the separator B has been peeled (this step is hereinafter referred to as "step (4)"), to thereby form the silicone foam layer. In this case, at least one kind of the separator (s) having been peeled is preferably a separator having a surface having an arithmetic average surface roughness Ra of from 0.1 $\mu$m to 5 $\mu$m.

A method of forming the silicone foam layer according to another embodiment includes: applying the silicone resin composition onto a separator A (this step is hereinafter referred to as "step (1)"); placing a separator B on a surface of the applied silicone resin composition opposite to the separator A (this step is hereinafter referred to as "step (2)"); thermally curing the silicone resin composition (this step is hereinafter referred to as "step (3)"); heating to dryness the silicone resin composition from which at least one kind selected from the separator A and the separator B has been peeled (this step is hereinafter referred to as "step (4) ") ; and bonding the resultant to a support (this step is hereinafter referred to as "step (5)"), to thereby form the silicone foam layer. In this case, at least one kind of the separator(s) having been peeled is preferably a separator having a surface having a specific arithmetic average surface roughness Ra. Moreover, the support is arranged on a surface side of the silicone resin composition having been thermally cured and heated to dryness, the surface side being opposite to a surface side of the silicone resin composition from which the above-mentioned separator has been peeled.

The separator A and the separator B each have a thickness of preferably from 1 $\mu$m to 500 $\mu$m, more preferably from 3 $\mu$m to 450 $\mu$m, still more preferably from 5 $\mu$m to 400 $\mu$m, particularly preferably from 10 $\mu$m to 300 $\mu$m.

The separator having a surface having a specific arithmetic average surface roughness Ra has an arithmetic average surface roughness Ra of preferably from 0.1 $\mu$m to 5 $\mu$m, more preferably from 0.15 $\mu$m to 4.5 $\mu$m, still more preferably from 0.2 $\mu$m to 4 $\mu$m, particularly preferably from 0.22 $\mu$m to 3.5 $\mu$m. When a separator having a surface having an arithmetic average surface roughness Ra falling within the above-mentioned range is adopted, the silicone foam layer to be formed can have more sufficient shear adhesive strength in a direction parallel to the surface, and can have smaller adhesive strength in a direction perpendicular to the surface.

When the separator having a surface having a specific arithmetic average surface roughness Ra as described above is adopted, a surface of the silicone foam layer to be obtained by peeling the separator therefrom has an arithmetic average surface roughness Ra of preferably from 0.1 μm to 10 μm, more preferably from 0.2 μm to 9 μm, still more preferably from 0. 3 μm to 8. 5 μm, particularly preferably from 0.4 μm to 8 μm. When the surface of the silicone foam layer to be obtained through the peeling as described above has an arithmetic average surface roughness Ra falling within the above-mentioned range, the temporary fixing sheet can have more sufficient shear adhesive strength in a direction parallel to the surface, and can have smaller adhesive strength in a direction perpendicular to the surface.

Examples of the separator having a surface having a specific arithmetic average surface roughness Ra as described above include paper, a plastic film, a polytetrafluoroethylene (PTFE) film, and a plastic film having a surface subjected to silicone treatment or fluorinated silicone treatment. Examples of the plastic film include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyethylene naphthalate film, a polyurethane film, an ethylene-vinyl acetate copolymer film, a polyimide film, a polyamide (nylon) film, and an aromatic polyamide (aramid) film. In particular, a plastic film not subjected to surface treatment, such as silicone treatment or fluorinated silicone treatment, is preferred from the viewpoint that the effects of the present invention can be further exhibited. The separator is particularly preferably a polyethylene terephthalate (PET) film not subjected to surface treatment, such as silicone treatment or fluorinated silicone treatment.

When the separator A or the separator B is directly used as the support, in order that its anchoring property with the silicone foam layer may be improved, it is preferred that an undercoating agent, such as a silane coupling agent, be applied to the surface of the separator A or the separator B serving as the support, or the surface be subjected to surface treatment, such as corona treatment or plasma treatment.

When a separator other than the separator having a surface having an arithmetic average surface roughness Ra of from 0.1 μm to 5 μm is used as the separator A or the separator B, for example, a plastic, metal, or glass sheet or film having no air permeability is preferred as such separator. As a material for such sheet or film, there are given, for example: olefin-based resins each containing an α-olefin as a monomer component, such as polyethylene (PE), polypropylene (PP), and an ethylene-vinyl acetate copolymer (EVA); polyester-based resins, such as polyethylene terephthalate (PET), polyethylene naphthalate (PEN), and polybutylene terephthalate (PBT); polyvinyl chloride (PVC); vinyl acetate-based resins; polyphenylene sulfide (PPS); amide-based resins, such as polyamide (nylon) and a wholly aromatic polyamide (aramid); polyimide-based resins; polyether ether ketone (PEEK); copper; aluminum; and any appropriate glass. There is also given, for example, a release liner obtained by subjecting the surface of a base material (liner base material), such as a polytetrafluoroethylene (PTFE) film, paper, or a plastic film, to silicone treatment or fluorinated silicone treatment. Examples of the plastic film serving as the liner base material include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyethylene naphthalate film, a polyurethane film, an ethylene-vinyl acetate copolymer film, a polyimidefilm, a polyamide (nylon) film, and an aromatic polyamide (aramid) film.

In the case where there is a separator that is not removed at the time of the heat drying in the step (4), a release liner that may be used as the separator is preferably the release liner obtained by subjecting the surface of the base material (liner base material), such as the polytetrafluoroethylene (PTFE) film, the paper, or the plastic film, to the fluorinated silicone treatment. In the case where there is a separator that is not removed at the time of the heat drying in the step (4), when the release liner obtained by subjecting the surface of the base material (liner base material), such as the polytetrafluoroethylene (PTFE) film, the paper, or the plastic film, to the fluorinated silicone treatment is used as the separator, its peeling after the heat drying can be easily performed. In addition, a pressure-sensitive adhesive layer may be arranged on the separator A or the separator B.

The separator A to be used in the step (1) and the separator B to be used in the step (2) may be identical to each other, or may be different from each other. In addition, each of the separator A to be used in the step (1) and the separator B to be used in the step (2) may be formed only of one layer, or may be formed of two or more layers.

In accordance with the degree of hydrophilicity or hydrophobicity of the surface of each of the separator A to be used in the step (1) and the separator B to be used in the step (2) in contact with the silicone resin composition, the shape of the surface of the silicone resin composition in contact with the surface changes . For example, when a separator having high hydrophilicity, such as a polyethylene terephthalate (PET) film, is used as the separator A or the separator B, many surface opening portions each having a fine diameter can be caused to be present in the surface of the silicone resin composition in contact with the separator. In addition, for example, when a separator having high hydrophobicity, such as a polyethylene terephthalate (PET) release liner subjected to fluorinated silicone treatment, is used as the separator A or the separator B, a small number of surface opening portions each having a fine diameter can be caused to be present in the surface of the silicone resin composition in contact with the separator. Therefore, when the silicone foam layer is to be caused to exhibit high air permeability or high adsorptivity, a separator having high hydrophilicity is preferably used, and when the silicone foam layer is to be caused to exhibit high cut-off performance or high dust resistance, a separator having high hydrophobicity is preferably used. In addition, when repeelability between the silicone foam layer and a separator is needed, a separator having high hydrophobicity is preferably used. The degree of hydrophilicity or hydrophobicity may be defined by, for example, a contact angle with water. For example, when the contact angle with water is less than 90°, a separator may be defined as being hydrophilic, and when the contact angle with water is 90° or more, the separator may be defined as being hydrophobic.

In the step (3), the silicone resin composition is thermally cured. The temperature of the heat curing is preferably 50°C or more and less than 100°C from the viewpoint that the silicone resin composition can be thermally cured with efficiency. When the temperature of the heat curing is less than 50°C, it may take too long time to perform the heat curing. When the temperature of the heat curing is 100°C or more, moisture in the silicone resin composition sandwiched between the separator A and the separator B to be brought into a substantially closed state may volatilize to cause the coarsening of cells to be formed or an increase in density thereof. A product formed from the silicone resin composition by the step (3) is referred to as "silicone foam layer precursor."

When a special heat curing method in which the silicone resin composition is thermally cured while being sandwiched between the separator A and the separator B to be brought into a substantially closed state like the step (3) is performed, the silicone resin composition is thermally cured under a state in which the moisture therein is not removed, and in cooperation with the subsequent step (4), the silicone foam layer having an open-cell structure and fine cell diameters can be effectively obtained.

In the step (4), the silicone foam layer precursor from which at least one kind selected from the separator A and the separator B has been peeled is heated to dryness. The peeling of at least one kind selected from the separator A and the separator B releases the substantially closed state in the step (3), and the heat drying in the released state efficiently volatilizes and removes the moisture from the silicone foam sheet precursor formed in the step (3) to provide the silicone foam layer. A heat drying temperature in the step (4) is preferably from 120°C to 250°C from the viewpoint that the silicone foam layer can be effectively formed. When the heat drying temperature in the step (4) is less than 120°C, it may take too long time to perform the drying and the curing, and the silicone foam sheet having an open-cell structure and fine cell diameters may not be obtained. When the heat drying temperature in the step (4) is more than 250°C, it may become difficult to form the sheet owing to the shrinkage or expansion of a base material.

In the step (5), after the step (4), the resultant is bonded to the support to form the silicone foam layer.

The silicone foam layer preferably has an open-cell structure . Specifically, the silicone foam layer preferably has an open-cell structure having a through-hole between adjacent cells. When the silicone foam layer has the open-cell structure, through the combination of this feature with any other feature of the silicone foam layer, the silicone foam layer exhibits the following effects: the layer can exhibit excellent bubble removability; an adherend can be bonded and temporarily fixed to the layer while the inclusion of bubbles is further prevented; and the layer can be more easily peeled without any adhesive residue when the temporary fixing is released. In addition, even when the thickness of the silicone foam layer is reduced, the exhibition of those effects can be maintained.

The silicone foam layer preferably has cells (spherical bubbles). The cells (spherical bubbles) may not be strictly spherical bubbles, and may be, for example, substantially spherical bubbles partially having strains or bubbles formed of spaces having large strains.

Whether or not the open-cell structure is present may be confirmed by capturing an enlarged image of a section of the silicone foam layer with a low-vacuum scanning electron microscope ("S-3400N Scanning Electron Microscope", manufactured by Hitachi High-Tech Fielding Corporation), and observing the presence or absence of a through-hole on a cell wall.

The open-cell ratio of the silicone foam layer is preferably 90% or more, more preferably from 90% to 100%, still more preferably from 92% to 100%, still further more preferably from 95% to 100%, particularly preferably from 99% to 100%, most preferably substantially 100%. When the open-cell ratio of the silicone foam layer falls within the above-mentioned range, through the combination of this feature with any other feature of the silicone foam layer, the silicone foam layer exhibits the following effects: the layer can exhibit more excellent bubble removability; an adherend can be bonded and temporarily fixed to the layer while the inclusion of bubbles is even further prevented; and the layer can be even more easily peeled without any adhesive residue when the temporary fixing is released. In addition, even when the thickness of the silicone foam layer is reduced, the exhibition of those effects can be further maintained.

For example, the open-cell ratio may be measured as described below. Specifically, the silicone foam layer is sunk in water, and is left to stand under a reduced pressure of -750 mmHg for 3 minutes so that air in its bubbles is replaced with the water. The weight of the absorbed water is measured, and the volume of the absorbed water is calculated by defining the density of the water as 1.0 g/cm$^3$, followed by the calculation of the open-cell ratio from the following equation.

$$\text{Open-cell ratio (\%)} = \{(\text{volume of absorbed water})/(\text{volume of bubble portions})\} \times 100$$

For example, the volume of the bubble portions is calculated from the following equation. Herein, the resin density is a value obtained by measuring the density of a resin molded body produced by removing an emulsifying agent in a resin forming the silicone foam layer.

$$\text{Volume (cm}^3\text{) of bubble portions} = \{(\text{weight of silicone foam layer})/(\text{apparent density of silicone foam layer})\} - \{(\text{weight of silicone foam layer})/(\text{resin density})\}$$

The average cell diameter of the silicone foam layer is preferably from 1 $\mu$m to 200 $\mu$m, more preferably from 1.5 $\mu$m to 180 $\mu$m, still more preferably from 2 $\mu$m to 170 $\mu$m, particularly preferably from 2.5 $\mu$m to 160 $\mu$m, most preferably from 3 $\mu$m to 150 $\mu$m. When the average cell diameter of the silicone foam layer falls within the above-mentioned range, through the combination of this feature with any other feature of the silicone foam layer, the silicone foam layer exhibits the following effects: the layer can exhibit more excellent bubble removability; an adherend can be bonded and temporarily fixed to the layer while the inclusion of bubbles is even further prevented; and the layer can be even more easily peeled without any adhesive residue when the temporary fixing is released. In addition, even when the thickness of the silicone foam layer is reduced, the exhibition of those effects can be further maintained.

In the silicone foam layer, it is preferred that 90% or more of all the cells each have a cell diameter of 300 $\mu$m or less, it is more preferred that 92% or more of all the cells each have a cell diameter of 300 $\mu$m or less, it is still more preferred that 95% or more of all the cells each have a cell diameter of 300 $\mu$m or less, it is particularly preferred that 97% or more of all the cells each have a cell diameter of 300 $\mu$m or less, and it is most preferred that substantially 100% of all the cells each have a cell diameter of 300 $\mu$m or less. In addition, in the silicone foam layer, it is more preferred that 90% or more of all the cells each have a cell diameter of 250 $\mu$m or less, it is still more preferred that 90% or more of all the cells each have a cell diameter of 200 $\mu$m or less, it is particularly preferred that 90% or more of all the cells each have a cell diameter of 180 $\mu$m or less, and it is most preferred that 90% or more of all the cells each have a cell diameter of 150 $\mu$m or less. When the ratio of cells each having a cell diameter of 300 $\mu$m or less in the silicone foam layer and the cell diameters of 90% or more of all the cells in the silicone foam layer fall within the above-mentioned ranges, through the combination of this feature with any other feature of the silicone foam layer, the silicone foam layer exhibits the following effects: the layer can exhibit more excellent bubble removability; an adherend can be bonded and temporarily fixed to the layer while the inclusion of bubbles is even further prevented; and the layer can be even more easily peeled without any adhesive residue when the temporary fixing is released. In addition, even when the thickness of the silicone foam layer is reduced, the exhibition of those effects can be further maintained.

A maximum cell diameter in all the cells in the silicone foam layer is preferably 300 $\mu$m or less, more preferably 250 $\mu$m or less, still more preferably 200 $\mu$m or less, particularly preferably 180 $\mu$m or less, most preferably 150 $\mu$m or less. When the maximum cell diameter in all the cells in the silicone foam layer falls within the above-mentioned range, through the combination of this feature with any other feature of the silicone foam layer, the silicone foam layer exhibits the following effects: the layer can exhibit more excellent bubble removability; an adherend can be bonded and temporarily fixed to the layer while the inclusion of bubbles is even further prevented; and the layer can be even more easily peeled without any adhesive residue when the temporary fixing is released. In addition, even when the thickness of the silicone foam layer is reduced, the exhibition of those effects can be further maintained.

A minimum cell diameter in all the cells in the silicone foam layer is preferably 100 $\mu$m or less, more preferably 80 $\mu$m or less, still more preferably 70 $\mu$m or less, particularly preferably 60 $\mu$m or less, most preferably 50 $\mu$m or less. When the minimum cell diameter in all the cells in the silicone foam layer falls within the above-mentioned range, through the combination of this feature with any other feature of the silicone foam layer, the silicone foam layer exhibits the following effects: the layer can exhibit more excellent bubble removability; an adherend can be bonded and temporarily fixed to the layer while the inclusion of bubbles is even further prevented; and the layer can be even more easily peeled without any adhesive residue when the temporary fixing is released. In addition, even when the thickness of the silicone foam layer is reduced, the exhibition of those effects can be further maintained.

Thus, when the silicone foam layer preferably has the open-cell structure and its cell diameters are preferably fine as described above, the temporary fixing sheet of the present invention is suitable as a temporary fixing sheet because the silicone foam layer exhibits the following effects: the layer can exhibit excellent bubble removability; an adherend can be bonded and temporarily fixed to the layer while the inclusion of bubbles is prevented; and the layer can be peeled without any adhesive residue when the temporary fixing is released.

The average cell diameter may be determined by, for example, capturing an enlarged image of a section of the silicone foam layer with a low-vacuum scanning electron microscope ("S-3400N Scanning Electron Microscope", manufactured by Hitachi High-Tech Science Systems Corporation) and analyzing the image. The number of cells to be analyzed is, for example, 20. The minimum cell diameter ($\mu$m) and the maximum cell diameter ($\mu$m) may each be determined by the same method.

The silicone foam layer preferably has surface opening portions. The term "surface opening portions" as used herein means opening portions that are present in the surface of the silicone foam layer and have an average pore diameter of a certain size. When the silicone foam layer has the surface opening portions, the silicone foam layer has the following effects: an adherend can be bonded and temporarily fixed to the layer while the inclusion of bubbles is further prevented; and the layer can be more easily peeled without any adhesive residue when the temporary fixing is released. This is probably because the surface opening portions serve as appropriate suckers. Thus, the temporary fixing sheet including the silicone foam layer can further exhibit a more excellent temporary fixing property.

The opening ratio of the surface opening portions is preferably from 1% to 99%, more preferably from 2% to 95%, still more preferably from 3% to 90%, particularlypreferably from 4% to 85%, most preferably from 5% to 80%. When the opening ratio of the surface opening portions falls within the above-mentioned range, the silicone foam layer has the following effects: an adherend can be bonded and temporarily fixed to the layer while the inclusion of bubbles is further prevented; and the layer can be more easily peeled without any adhesive residue when the temporary fixing is released.

The average pore diameter of the surface opening portions is preferably 150 $\mu$m or less, more preferably from 0.5 $\mu$m to 145 $\mu$m, still more preferably from 1.0 $\mu$m to 140 $\mu$m, particularly preferably from 1.5 $\mu$m to 135 $\mu$m, most preferably from 2.0 $\mu$m to 130 $\mu$m. When the average pore diameter of the surface opening portions falls within the above-mentioned range, the silicone foam layer has the following effects: an adherend can be bonded and temporarily fixed to the layer while the inclusion of bubbles is further prevented; and the layer can be more easily peeled without any adhesive residue when the temporary fixing is released.

The average pore diameter of the surface opening portions may be determined by, for example, capturing an enlarged image of the surface of the silicone foam layer with a low-vacuum scanning electron microscope ("S-3400N Scanning Electron Microscope", manufactured by Hitachi High-Tech Fielding Corporation) and analyzing the image. The number of pores to be analyzed is, for example, 20.

The apparent density of the silicone foam layer is preferably from 0.15 g/cm$^3$ to 0.90 g/cm$^3$, more preferably from 0.20 g/cm$^3$ to 0.85 g/cm$^3$, still more preferably from 0.25 g/cm$^3$ to 0.80 g/cm$^3$, particularly preferably from 0.30 g/cm$^3$ to 0.75 g/cm$^3$. When the apparent density of the silicone foam layer falls within the above-mentioned range, through the combination of this feature with any other feature of the silicone foam layer, the silicone foam layer has the following effects: an adherend can be bonded and temporarily fixed to the layer while the inclusion of bubbles is further prevented; and the layer can be more easily peeled without any adhesive residue when the temporary fixing is released. In addition, even when the thickness of the silicone foam layer is reduced, the exhibition of those effects can be maintained.

The surface of the silicone foam layer has an arithmetic average surface roughness Ra of preferably from 0.1 $\mu$m to 10 $\mu$m, more preferably from 0.2 $\mu$m to 9 $\mu$m, still more preferably from 0.3 $\mu$m to 8.5 $\mu$m, particularly preferably from 0.4 $\mu$m to 8 $\mu$m. When the surface of the silicone foam layer has an arithmetic average surface roughness Ra falling within the above-mentioned range, the temporary fixing sheet can have more sufficient shear adhesive strength in a direction parallel to the surface, and can have smaller adhesive strength in a direction perpendicular to the surface.

A separator may be attached to the surface of the silicone foam layer, for example, before use. When such separator does not function as a support, the separator is preferably peeled from the surface of the silicone foam layer before a member to be temporarily fixed is placed on the temporary fixing sheet.

The thickness of the separator is preferably from 1 $\mu$m to 500 $\mu$m, more preferably from 3 $\mu$m to 450 $\mu$m, still more preferably from 5 $\mu$m to 400 $\mu$m, particularly preferably from 10 $\mu$m to 300 $\mu$m.

Examples of the separator include paper, a plastic film, a polytetrafluoroethylene (PTFE) film, and a plastic film having a surface subjected to silicone treatment or fluorinated silicone treatment.

Examples of the plastic film include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyethylene naphthalate film, a polyurethane film, an ethylene-vinyl acetate copolymer film, a polyimide film, a polyamide (nylon) film, and an aromatic polyamide (aramid) film.

In particular, from the viewpoint that the effects of the present invention can be further exhibited, it is preferred that any such plastic film not subjected to surface treatment, such as silicone treatment or fluorinated silicone treatment, be attached to at least one surface of the silicone foam layer as the separator. The separator is particularly preferably a polyethylene terephthalate (PET) film not subjected to surface treatment, such as silicone treatment or fluorinated silicone treatment.

Such separator has, on a surface thereof, an arithmetic average surface roughness Ra of preferably from 0.1 $\mu$m to 5 $\mu$m, more preferably from 0.15 $\mu$m to 4.5 $\mu$m, still more preferably from 0.2 $\mu$m to 4 $\mu$m, particularly preferably from 0.22 $\mu$m to 3.5 $\mu$m. When a separator having a surface having an arithmetic average surface roughness Ra falling within the above-mentioned range is adopted, the temporary fixing sheet can have more sufficient shear adhesive strength in a direction parallel to the surface, and can have smaller adhesive strength in a direction perpendicular to the surface by peeling the separator from the surface of the silicone foam layer before a member to be temporarily fixed is placed on the temporary fixing sheet.

The temporary fixing sheet according to one embodiment includes the silicone foam layer in the entirety of the temporary fixing sheet. That is, the temporary fixing sheet according to one embodiment consists of the silicone foam layer.

The temporary fixing sheet according to one embodiment includes the silicone foam layer in part of the temporary fixing sheet, and at least one of outermost layers of the temporary fixing sheet is the silicone foam layer.

The temporary fixing sheet according to a preferred embodiment includes a support on one surface side of the silicone foam layer. In this embodiment, a separator may be attached to the other surface of the silicone foam layer, for example, before use. Such separator is preferably the separator having a surface having a specific arithmetic average surface roughness Ra as described above.

The temporary fixing sheet according to a preferred embodiment includes a pressure-sensitive adhesive layer on one surface side of the silicone foam layer. In this embodiment, separators may be attached to the other surface of the silicone foam layer and the other surface of the pressure-sensitive adhesive layer, for example, before use. Of those separators, the separator to be attached to the other surface of the silicone foam layer is preferably the separator having a surface having an arithmetic average surface roughness Ra of preferably from 0.1 $\mu$m to 5 $\mu$m as described above.

The temporary fixing sheet according to one embodiment includes a support on one surface side of the silicone foam layer, and further includes a pressure-sensitive adhesive layer on a surface side of the support opposite to the silicone foam layer. That is, the temporary fixing sheet has a form of silicone foam layer/support/pressure-sensitive adhesive layer. In this embodiment, separators may be attached to the other surface of the silicone foam layer and the other surface of the pressure-sensitive adhesive layer, for example, before use. Of those separators, the separator to be attached to the other surface of the silicone foam layer is preferably the separator having a surface having an arithmetic average surface roughness Ra of preferably from 0.1 $\mu$m to 5 $\mu$m as described above.

The temporary fixing sheet according to one embodiment includes a support on one surface side of the silicone foam layer, and further includes another silicone foam layer on a surface side of the support opposite to the silicone foam layer. That is, the temporary fixing sheet has a form of silicone foam layer/support/silicone foam layer. In this embodiment, a separator may be attached to the other surface of one of the silicone foam layers, for example, before use. Such separator is preferably the separator having a surface having an arithmetic average surface roughness Ra of preferably from 0.1 $\mu$m to 5 $\mu$m as described above.

Any appropriate support may be adopted as the support as long as the support can support the silicone foam layer. Examples of such support include : aplastic film, sheet, or tape; paper; a nonwoven fabric; a metal foil or a metal mesh; and glass or a glass cloth. The number of the supports may be one, or may be two or more. In addition, in order that an anchoring property between the support and the silicone foam layer may be improved, it is preferred that an undercoating agent, such as a silane coupling agent, be applied to the surface of the support, or the surface be subjected to surface treatment, such as corona treatment or plasma treatment.

Examples of the plastic film include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyethylene naphthalate film, a polyurethane film, an ethylene-vinyl acetate copolymer film, a polyimide film, a polyamide (nylon) film, and an aromatic polyamide (aramid) film.

As the pressure-sensitive adhesive layer, a layer formed of any appropriate pressure-sensitive adhesive may be adopted. Examples of such pressure-sensitive adhesive include a rubber-based pressure-sensitive adhesive (e.g., a synthetic rubber-based pressure-sensitive adhesive or a natural rubber-based pressure-sensitive adhesive), a urethane-based pressure-sensitive adhesive, an acrylic urethane-based pressure-sensitive adhesive, an acrylic pressure-sensitive adhesive, a silicone-based pressure-sensitive adhesive, a polyester-based pressure-sensitive adhesive, a polyamide-based pressure-sensitive adhesive, an epoxy-based pressure-sensitive adhesive, a vinyl alkyl ether-based pressure-sensitive adhesive, and a fluorine-based pressure-sensitive adhesive. Those pressure-sensitive adhesives may be used alone or in combination thereof. The number of the pressure-sensitive adhesive layers may be one, or may be two or more.

The pressure-sensitive adhesives are classified into, for example, an emulsion-type pressure-sensitive adhesive, a solvent-type pressure-sensitive adhesive, an ultraviolet-cross-linkable (UV-cross-linkable) pressure-sensitive adhesive, an electron beam-cross-linkable (EB-cross-linkable) pressure-sensitive adhesive, and a hot-melt pressure-sensitive adhesive in terms of a pressure-sensitive adhesion form. Those pressure-sensitive adhesives may be used alone or in combination thereof.

In the temporary fixing sheet according to one embodiment, any appropriate other foam layer may be adopted as long as the effects of the present invention are not impaired. An example of such other foam layer is an acrylic foam layer.

Examples

Now, the present invention is described specifically by way of Examples. However, the present invention is by no means limited to Examples. Test and evaluation methods in Examples and the like are as described below. The term "part(s)" in the following description means "part (s) by weight" unless otherwise specified, and the term "%" in the following description means "wt%" unless otherwise specified.

<Measurement of Thickness>

An object to be measured (e.g., adsorption temporary fixing sheet) was placed on a glass sheet (Micro Slide Glass S, manufactured by Matsunami Glass Ind., Ltd.) in a 3D measurement laser microscope (LEXT OLS4000, manufactured by Olympus Corporation) with a high-precision objective lens at a magnification of 10 times. A 3D image from the surface of the glass sheet to the uppermost part of the object to be measured was measured, and the resultant height was used as the thickness of the object to be measured.

<Measurement of Apparent Density>

An object to be measured (e.g., adsorption temporary fixing sheet) was punched with a punching blade die measuring 50 mm by 50 mm. A thickness value obtained in the <Measurement of Thickness> section was used as the thickness of the object to be measured. The volume of the object to be measured was calculated from those values.
Next, the weight of the object to be measured was measured with an even balance having a minimum scale of 0.01 g or more. The apparent density ($g/cm^3$) of the object to be measured was calculated from those values.

<Appearance Evaluation of Sheet Having a Thickness of 200 $\mu$m>

An object to be measured (e.g., temporary fixing sheet) was punched with a punching blade die measuring 100 mm$\times$100 mm, and the sizes and number of pinholes were evaluated by using a dirt comparison chart.
◎: The number of pinholes of 0.3 $mm^2$ or more and less than 0.7 $mm^2$ is less than 10.
○: The number of pinholes of 0.3 $mm^2$ or more and less than 0.7 $mm^2$ is 10 or more and less than 50.
×: The number of pinholes of 0.3 $mm^2$ or more and less than 0.7 $mm^2$ is 10 or more and less than 50, or the number of pinholes of 0.7 $mm^2$ or more is 1 or more.

<Surface Resistivity>

An object to be measured (e.g., adsorption temporary fixing sheet) was cut into a size measuring 100 mm$\times$100 mm, and a surface resistivity ($\Omega/\square$) was determined with Hiresta HT-210 (manufactured by Mitsubishi Petrochemical Co., Ltd.).

[Production Example 1]: Production of Masterbatch (AG-1)

80 Parts by weight of a dimethylsiloxane-methylvinylsiloxane copolymer blocked with trimethylsiloxy groups at both ends of its molecular chain (vinyl group content: 0.30 weight%), the copolymer having a viscosity of 8,000 mPa·s, and 20 parts by weight of acetylene black (Denka Black, manufactured by Denka Company Limited) were loaded into a Ross mixer, and were uniformly mixed at room temperature, followed by being passed through a three-roll mill five times. Thus, a masterbatch (AG-1) having fluidity including an organopolysiloxane having at least two alkenyl groups in a molecule thereof (component (A)) and a conductive substance (component (G)) was produced.

[Production Example 2]: Production of Masterbatch (AG-2)

65 Parts by weight of a dimethylsiloxane-methylvinylsiloxane copolymer blocked with trimethylsiloxy groups at both ends of its molecular chain (vinyl group content: 0.13 weight%), the copolymer having a viscosity of 40,000 mPa·s, and 35 parts by weight of acetylene black (Denka Black, manufactured by Denka Company Limited) were loaded into a Ross mixer, and were uniformly mixed at room temperature, followed by being passed through a three-roll mill five times. Thus, a carbon black masterbatch (AG-2) having fluidity including an organopolysiloxane having at least two alkenyl groups in a molecule thereof (component (A)) and a conductive substance (component (G)) was produced.

[Production Example 3]: Production of Masterbatch (AG-3)

80 Parts by weight of a dimethylsiloxane-methylvinylsiloxane copolymer blocked with trimethylsiloxy groups at both ends of its molecular chain (vinyl group content: 0.30 weight%), the copolymer having a viscosity of 8,000 mPa·s, and 20 parts by weight of ketjen black (EC-600JD, manufactured by Ketjen Black International Co.) were loaded into a Ross mixer, and were uniformly mixed at room temperature, followed by being passed through a three-roll mill five times. Thus, a masterbatch (AG-3) having fluidity including an organopolysiloxane having at least two alkenyl groups in a molecule thereof (component (A)) and a conductive substance (component (G)) was produced.

[Production Example 4]: Production of Masterbatch (AG-4)

65 Parts by weight of a dimethylsiloxane-methylvinylsiloxane copolymer blocked with trimethylsiloxy groups at both ends of its molecular chain (vinyl group content: 0.13 weight%), the copolymer having a viscosity of 40,000 mPa·s, and 35 parts by weight of ketjen black (EC-600JD, manufactured by Ketjen Black International Co.) were loaded into a Ross mixer, and were uniformly mixed at room temperature, followed by being passed through a three-roll mill five times. Thus, a carbon black masterbatch (AG-4) having fluidity including an organopolysiloxane having at least two alkenyl groups in a molecule thereof (component (A)) and a conductive substance (component (G)) was produced.

[Production Example 5]: Preparation of Organopolysiloxane (A-1) Having at Least Two Alkenyl Groups in a Molecule Thereof

A dimethylsiloxane-methylvinylsiloxane copolymer blocked with trimethylsiloxy groups at both ends of its molecular chain (vinyl group content: 0.13 weight%), the copolymer having a viscosity of 40,000 mPa·s, was used as an organopolysiloxane (A-1) having at least two alkenyl groups in a molecule thereof (component (A)).

[Production Example 6]: Preparation of Organopolysiloxane (B-1) Having at Least Two Silicon Atom-bonded Hydrogen Atoms in a Molecule Thereof

A dimethylsiloxane-methylhydrogensiloxane copolymer blocked with trimethylsiloxy groups at both ends of its molecular chain (silicon atom-bonded hydrogen atom content: 0.69 weight%), the copolymer having a kinematic viscosity of 43.5 $mm^2/s$, was used as an organopolysiloxane (B-1) having at least two silicon atom-bonded hydrogen atoms in a molecule thereof (component (B)).

[Production Example 7] : Production of Mixture (C-1) Including Water and Inorganic Thickener

1 Part by weight of smectite clay (hydrophilic purified bentonite composited with an organic polymer (pH: 6.5), manufactured by Hojun Co., Ltd.) and 99 parts by weight of ion exchanged water were loaded into a homomixer, and were uniformly mixed at room temperature. Thus, a mixture (C-1) including water and an inorganic thickener was produced (component (C)).

[Production Example 8]: Preparation of Nonionic Surfactant (D-1-1) Having an HLB Value of 3 or More

Anonionic surfactant (sorbitan fatty acid ester, product name: RHEODOL SP-O10V, manufactured by Kao Corporation, HLB: 4.3) was used as a nonionic surfactant (D-1-1) having an HLB value of 3 or more (component (D-1)).

[Production Example 9] : Preparation of Nonionic Surfactant (D-2-1) Having an HLB Value of Less than 3

Anonionic surfactant (sorbitan fatty acidester, product name: RHEODOL SP-O30V, manufactured by Kao Corporation, HLB: 1.8) was used as a nonionic surfactant (D-2-1) having an HLB value of less than 3 (component (D-2)).

[Production Example 10]: Preparation of Hydrosilylation Reaction Catalyst (E-1)

A solution of a 1,3-divinyltetramethyldisiloxane complex of platinum in 1,3-divinyltetramethyldisiloxane (platinum metal content: 4,000 ppm) was used as a hydrosilylation reaction catalyst (E-1) (component (E)).

[Production Example 11]: Production of Curing Retarder (F-1)

2 Parts by weight of ethynylcyclohexanol and 98 parts by weight of dimethylpolysiloxane blocked with dimethylvinylsiloxy groups at both ends of its molecular chain, the dimethylpolysiloxane having a viscosity of 10,000 mPa·s, were mixed. Thus, a curing retarder (F-1) was produced (component (F)).

[Examples 1 to 8 and Comparative Examples 1 to 6]

The masterbatch including the component (A) and the component (G), the component (A), the component (C), the component (D-1), and the component (D-2) were loaded into a homomixer (manufactured by Tokushu Kika Kogyo Co., Ltd.) at blending ratios shown in Table 1, and were uniformly mixed at 25°C. Next, the component (B), the component (E), and the component (F) were blended in the obtained mixture, and the resultant was loaded into a homomixer (manufactured by Tokushu Kika Kogyo Co., Ltd.), and was uniformly mixed at 25°C and degassed. Thus, a silicone resin composition was prepared.

The obtained silicone resin composition was applied onto a fluorosilicone-treated PET film (NIPPA SHEET PET38×1-SS4A, manufactured by Nippa) with an applicator, and a PET film (Lumirror S10, manufactured by Toray Industries, Inc.) was mounted from above the composition, followed by heating with a hot-air oven at 85°C for 10 minutes to cure the resin composition. After the curing, the PET films were peeled, and heat drying was performed at 200°C for 3 minutes. Thus, temporary fixing sheets (1) to (8) and (C1) to (C6) each having a sheet form having a thickness of 200 μm were obtained. The results are shown in Table 1.

Table 1

| | | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|
| Masterbatch including component (A) and component (G) | AG-1 | 50 | 25 | 19.8 | 13.5 | 25 | 13.5 | | | 50 | 25 | 19.8 | 13.5 | 25 | 13.5 |
| | AG-2 | | | | 17.1 | 17.1 | 28.6 | | | | | | 17.1 | 17.1 | 28.6 |
| | AG-3 | | | | | | | 19.8 | 13.5 | | | | | | |
| | AG-4 | | | | | | | | 17.1 | | | | | | |
| Component (A) (part(s)) | A-1 | 60 | 80 | 84.2 | 78.1 | 68.9 | 70.6 | 84.2 | 78.1 | 60 | 80 | 84.2 | 78.1 | 68.9 | 70.6 |
| Component (B) (part(s)) | B-1 | 5.25 | 5.25 | 5.25 | 5.25 | 5.25 | 5.25 | 5.25 | 5.25 | 5.25 | 5.25 | 5.25 | 5.25 | 5.25 | 5.25 |
| Component (C) (part(s)) | C-1 | 127.5 | 127.5 | 127.5 | 127.5 | 127.5 | 127.5 | 127.5 | 127.5 | 127.5 | 127.5 | 127.5 | 127.5 | 127.5 | 127.5 |
| Component (D-1) (part(s)) | D-1-1 | 8 | 4 | 3 | 8 | 9 | 10 | 3 | 8 | 1.2 | 1.2 | 1.2 | 1.2 | 1.2 | 1.2 |
| Component (D-2) (part(s)) | D-2-1 | 0.5 | 0.3 | 0.25 | 0.5 | 0.5 | 0.6 | 0.25 | 0.5 | 1.9 | 1.9 | 1.9 | 1.9 | 1.9 | 1.9 |
| Component (E) (part(s)) | E-1 | 0.9 | 0.9 | 0.9 | 0.9 | 0.9 | 0.9 | 0.9 | 0.9 | 0.9 | 0.9 | 0.9 | 0.9 | 0.9 | 0.9 |
| Component (F) (part(s)) | F-1 | 0.35 | 0.35 | 0.35 | 0.35 | 0.35 | 0.35 | 0.35 | 0.35 | 0.35 | 0.35 | 0.35 | 0.35 | 0.35 | 0.35 |

(continued)

| | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|
| Amount (part(s)) of component (D-1) with respect to 1 part of component (G) | 0.80 | 0.80 | 0.76 | 0.92 | 0.82 | 0.79 | 0.76 | 0.92 | 0.12 | 0.24 | 0.30 | 0.14 | 0.11 | 0.09 |
| Amount (part(s)) of component (D-2) with respect to 1 part of component (G) | 0.05 | 0.06 | 0.06 | 0.06 | 0.05 | 0.05 | 0.06 | 0.06 | 0.19 | 0.38 | 0.48 | 0.22 | 0.17 | 0.15 |
| Appearance of sheet having a thickness of 200 μm | ○ | ○ | ○ | ○ | ○ | ○ | ◎ | ◎ | × | × | × | × | × | × |
| Whether or not surface resistivity is $10^{10}$ Ω/□ or less | ○ | ○ | ○ | ○ | ○ | ○ | ○ | ○ | ○ | ○ | ○ | ○ | ○ | ○ |

Industrial Applicability

The temporary fixing sheet of the present invention can be utilized as temporary fixing materials in various fields. In particular, the temporary fixing sheet of the present invention is suitably used for temporary fixing of an electronic member.

**Claims**

1.  A temporary fixing sheet, comprising a silicone foam layer,
    wherein the silicone foam layer is formed of a silicone resin composition comprising:

    (A) 100 parts by weight of an organopolysiloxane having at least two alkenyl groups in a molecule thereof;
    (B) an organopolysiloxane having at least two silicon atom-bonded hydrogen atoms in a molecule thereof in such an amount that a number of moles of the silicon atom-bonded hydrogen atoms in the component (B) is from 0.4 mol to 20 mol with respect to 1 mol of the alkenyl groups in the component (A);
    (C) 100 parts by weight to 1,000 parts by weight of a mixture including water and an inorganic thickener;
    (D-1) 0.2 part by weight to 1.2 parts by weight of a nonionic surfactant having an HLB value of 3 or more with respect to 1 part by weight of a component (G);
    (D-2) 0.01 part by weight to 0.14 part by weight of a nonionic surfactant having an HLB value of less than 3 with respect to 1 part by weight of the component (G);
    (E) a hydrosilylation reaction catalyst;
    (F) 0.001 part by weight to 5 parts by weight of a curing retarder; and
    (G) 0.1 part by weight to 100 parts by weight of a conductive substance when a total of the component (A) and the component (B) is defined as 100 parts by weight.

2.  The temporary fixing sheet according to claim 1, wherein an amount of the component (D-1) is from 0.5 part by weight to 1.1 parts by weight with respect to 1 part by weight of the component (G) .

3.  The temporary fixing sheet according to claim 2, wherein the amount of the component (D-1) is from 0.7 part by weight to 1.0 part by weight with respect to 1 part by weight of the component (G) .

4.  The temporary fixing sheet according to claim 1, wherein an amount of the component (D-2) is from 0.02 part by weight to 0.10 part by weight with respect to 1 part by weight of the component (G) .

5.  The temporary fixing sheet according to claim 4, wherein the amount of the component (D-2) is from 0.04 part by weight to 0.07 part by weight with respect to 1 part by weight of the component (G) .

6.  The temporary fixing sheet according to any one of claims 1 to 5, wherein the component (G) comprises carbon black.

7.  The temporary fixing sheet according to claim 6, wherein the carbon black comprises ketjen black.

8.  The temporary fixing sheet according to any one of claims 1 to 7, wherein the silicone foam layer has an apparent density of from 0.15 g/cm$^3$ to 0.90 g/cm$^3$.

9.  The temporary fixing sheet according to any one of claims 1 to 8,
    wherein the temporary fixing sheet is used for temporary fixing of an electronic member.

## INTERNATIONAL SEARCH REPORT

| International application No. |
| --- |
| PCT/JP2018/022210 |

**A. CLASSIFICATION OF SUBJECT MATTER**
Int. Cl. C08J9/28(2006.01)i, C08K3/34(2006.01)i, C08L83/05(2006.01)i, C08L83/07(2006.01)i

According to International Patent Classification (IPC) or to both national classification and IPC

**B. FIELDS SEARCHED**

Minimum documentation searched (classification system followed by classification symbols)
Int. Cl. C08J9/28, C08K3/34, C08L83/05, C08L83/07

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2014-51550 A (DOW CORNING TORAY CO., LTD.) 20 March 2014, claims, examples & US 2015/0228372 A1, claims, examples & WO 2014/038720 A2 & EP 2892944 A2 | 1-9 |
| A | JP 2008-214625 A (DOW CORNING TORAY CO., LTD.) 18 September 2008, claims, examples & JP 2014-58687 A & US 2011/0021649 A1 & WO 2008/096882 A1 & EP 2118202 A1, claims, examples | 1-9 |
| A | WO 2017/110681 A1 (DOW CORNING TORAY CO., LTD.) 29 June 2017, claims, examples & TW 201739606 A | 1-9 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20.08.2018 | 04.09.2018 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

International application No.

PCT/JP2018/022210

C (Continuation). DOCUMENTS CONSIDERED TO BE RELEVANT

| Category* | Citation of document, with indication, where appropriate, of the relevant passages | Relevant to claim No. |
|---|---|---|
| A | WO 2017/110565 A1 (DOW CORNING TORAY CO., LTD.) 29 June 2017, claims, examples & TW 201736517 A | 1-9 |
| A | JP 2013-189496 A (FUKOKU CO., LTD.) 26 September 2013, claims, examples (Family: none) | 1-9 |
| P, A | JP 2017-186458 A (NITTO DENKO CORP.) 12 October 2017, claims, examples & WO 2017/175512 A1 | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5702899 B

- JP 2014167067 A